# EUROPEAN PATENT APPLICATION

(11) **EP 1 898 553 A1**
(43) Date of publication of application: **12.03.2008**
(21) Application number: 06018269.8
(22) Date of filing: 31.08.2006
(51) Int. Cl.: H04L 12/24

(54) **Generic network configuration management with XML**

(71) Applicant: Nokia Siemens Networks GmbH & Co. KG, 81541 München (DE)
(72) Inventor: Kalyanasundaram, S., 560075 Bangalore (IN); Sharma, Subramanya, 560082 Bangalore (IN)

(57) **Abstract**

Introduction of a new managed entity within a Network Management System, NMS, within a framework by the use of XML files by uploading parameters depending on a Network Element, NE, type (118, 120), mapping responses from the NE type to internal representation, viewing a relation of different Managed Entities, generating commands in the form of XML files (114, 116) that represent data/logic required for supporting different use cases of the new managed entity, and introducing these XML files into the framework.

## Description

Equipment vendors (e.g. Siemens)/NMS Vendors spend a lot of development effort to integrate new Network Element NE types/versions into their Network Management NM solutions.

Take for example, Media Gateway MGW Configuration Management support via Network Management System NMS. Vendors spend significant custom development effort for introducing Managed Elements of the respective NE type into their NMS which can run into development efforts of tens of staff years for each version.

In addition, different operators/customers might have different requirements (e.g. different consistency checks to be defined - e.g. limiting the number of routes for a Destination) and it would be difficult to handle such customer specific customizations in a fast and efficient manner.

Given the common goal of the operators and the vendors, i.e., reduction of integration burden, there is a need for O&M (Original Manufacturer) systems that can integrate new NE types easily and with lesser effort.

A generic Customer Management CM framework is proposed for integrating Managed Entities of any kind of NE Device/type/version/ (based on any protocol) into NMS This approach offers functionality enabling vendors/operators to define rules/constraints/semantics in business language (via XML). Integrating a new NE type would be reduced to authoring these XML files compared to the earlier approach of a full development cycle (Design, Coding, etc.) thus bringing in huge cost savings.

The use cases supported with this CM framework is Upload (i.e Fetching Network data from several Network Elements), Planning (i.e Configuring a new network/modification), Consistency Checks, Command Generation and Execution (i.e generating NE Type specific commands), Export and Import.

Until now, this problem was solved using a custom development approach. Each NE type would have to be "code" integrated into the NMS.

### Summary & Objects Of The Invention

A method and apparatus are provided for the introduction of a new managed entity within a Network Management System, NMS, within a framework by the use of XML files including uploading parameters depending on a Network Element, NE, type (118, 120), mapping responses from the NE type to internal representation, viewing a relation of different Managed Entities, generating commands in the form of XML files (114, 116) that represent data/logic required for supporting different use cases of the new managed entity, and introducing these XML files into the framework.

### Detailed Description

According to this proposal, Extended Mark-Up Language, XML, files will represent all the data/logic required for supporting the different use cases of Upload, View, Consistency Checks and Command Generation. These XML files contain English like Rules (defined via the new CM language) for the different use cases. With the architectures' XML files/modularity approach, two systems (NE and NMS) have managed to talk both in terms of syntax and semantics.

A uniform XML interface is, thus, provided across NE types for both input and output. Also, uniform XML representation (via the CM language) exists even for the developers/NM integrators to integrate managed objects of any NE type/version.

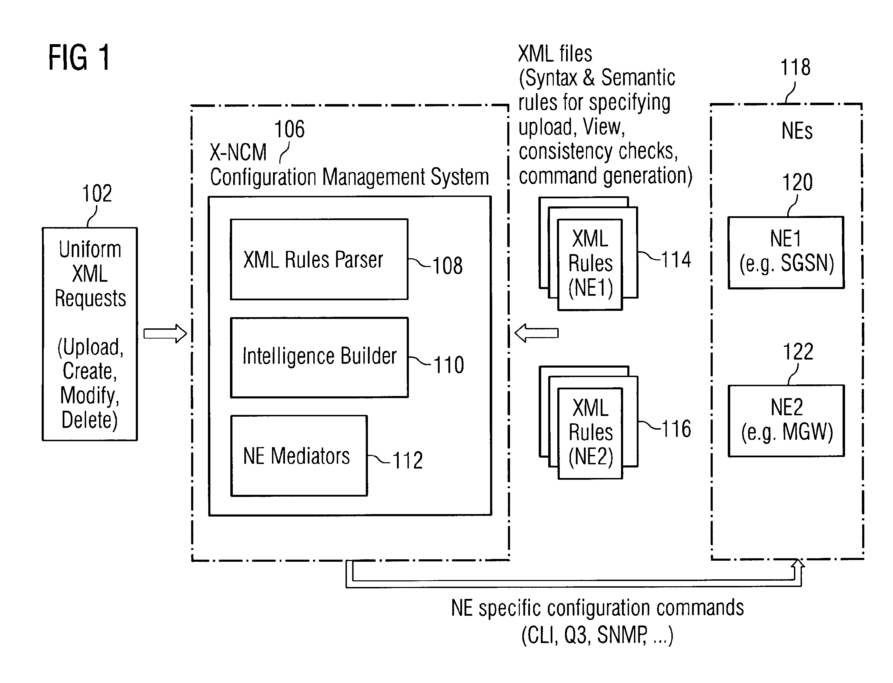

A first example will now be discussed according to Figure 1. In this example, a new managed entity (e.g. IP Route for a MGW) within the NMS is introduced.

In the figure, there is shown a top down view 100 of the invention. Uniform XML requests 102 are input to the X-NCM Network Configuration Management 106, that includes an XML rules parser 108, an intelligence builder 110 and NE mediators 112. XML files 114 and 116 provide semantic rules, for example, to specify upload, view consistency checks, and command generation. NEs 118 may include NE1 120 and NE2 122.

In order to introduce the new managed entity, the following steps are taken within the framework via XML files.
a) View/Export Format Definition (Columns, Visibility, Length).
b) Upload
   - Upload parameters depending on the NE type (Regen Subsytem, DISP Commands, m-get/m-action requests...)
   - Mapping responses from the NE to internal representation
   - View Formation (relating different Managed Entities for coordination if any).
c) Command Generation
   - Consistency checks
   - Command semantics and sequencing details
   - Mapping internal representation to NE specific format

The developer should fill in the XML files as mentioned in the above steps and introduce these files into the framework.

The new object is available for configuration management immediately.

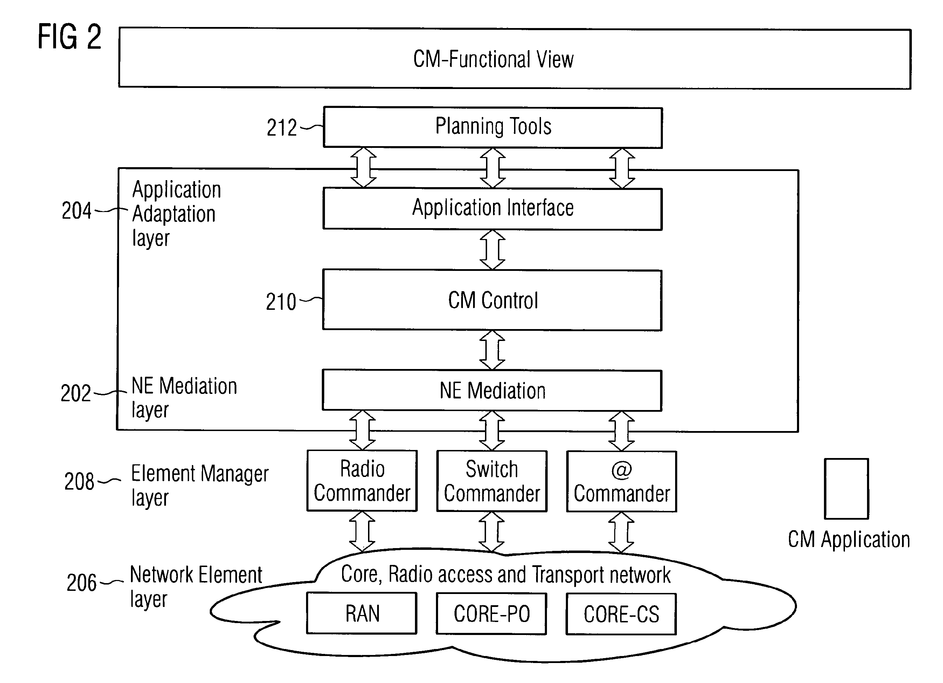

To achieve a generic CM framework, the proposal is to logically separate the functionality into two layers - Mediation and Application Layers. These layers are shown in the Functional View 200 of Figure 2.

The Mediation Layer 202 handles NE Dependencies via modularity files. It uploads Syntax/Mask required and downloads syntax as well as Semantics required. The NE Abstraction Layer is achieved via an Internal Relational Object Model. Where different NE types have different management protocols the proposal abstracts at application and provides a protocol independent representation.

NE mediation manages the network elements NE in the Network Element Layer 206 through the Element Manager Layer 208.

The Application Layer 204 provides the ability to group related commands in/across NEs. It also provides the ability to introduce consistency checks at command/View level. The Application Layer provides flexibility to define configurations/views via user/developer friendly means via Modularity files.

CM control 210 by the application is effected through the Application Adaptation Layer in accordance with the applications and the planning tools 212.

The invention could also be used to introduce a new check (Plausibility check) by a customer/operator will now be discussed. The introduction of a new check adds a new XML rule (English statement) in the Command Generation XML file.

Further, the invention is also applicable to an introduction of a new View for an operator (involving existing objects).

This would lead to the operator adding a new XML rule in the View definition XML file.

The advantages of the invention are gained by the technical features of the invention. For one thing, the invention integrates effortlessly managed entities of any network device/element (e.g. Effort reduction of circa 75% compared with existing efforts).

Further, uniform XML representation for the NMS/developers/vendor to integrate any new NE type (via the user friendly CM language) is provided. This makes NE abstraction easier to achieve for the NMS vendor.

In addition, uniform XML representation is provided for customers/operators for configuration requests (e.g. Bulk Upload, Creation, Modification, Deletion).
Maintenance effort is drastically reduced.

And it is easier to customize for different operators via changing XML files (e.g. introduction of a new consistency/planning check or the introduction of a new View of the NE object).

It is also easier for both operator/vendor to build in coordination between network elements for common configuration (e.g. Trunk/TID administration in both Media gateway and MSC Server).

## Claims

1. A method for the introduction of a new managed entity within a Network Management System, NMS, within a framework by the use of XML files, **characterized in that**:
uploading parameters depending on a Network Element, NE, type (118, 120),
mapping responses from the NE type to internal representation,
viewing a relation of different Managed Entities,
generating commands in the form of XML files (114, 116) that represent data/logic required for supporting different use cases of the new managed entity, and
introducing these XML files into the framework.

2. The method of claim 1, further **characterized by** logically separating a functionality of the commands into two layers, a Mediation (202) and an Application Layer (204).

3. The method of any of the preceding claims, further **characterized in that** the generating step generates a command that performs consistency checks.

4. The method of any of the preceding claims, further **characterized in that** the generating step generates a command that performs command semantics.

5. The method of any of the preceding claims, further **characterized in that** the generating step generates a command that performs mapping an internal representation to an NE specific format.

6. An apparatus for introducing a new managed entity according to any of the preceding steps, **characterized by**:
an X-NCM Network Configuration Management System (106) that inputs XML requests (102),
and receives the XML files (114 and 116) that provide semantic rules,

7. The apparatus of claim 6 further **characterized in that** the X-NCM System (106) includes an XML rules parser (108), an intelligence builder (110) and NE mediators (112).
